# EUROPEAN PATENT SPECIFICATION

(11) **EP 2 815 909 B1**
(45) Date of publication and mention of the grant of the patent: **15.01.2020**
(21) Application number: 13172522.8
(22) Date of filing: 18.06.2013
(51) Int. Cl.: B60H 1/34, B60H 1/00

(54) **Air distribution system**
Luftverteilungssystem
Système de distribution d'air

(43) Date of publication of application: 24.12.2014
(73) Proprietor: Volvo Car Corporation, 40 531 Göteborg (SE)
(72) Inventor: Disley, Jonathan, 43952 Asa (SE); Palm, Niklas, 41253 Göteborg (SE); Evers, Erik, J2L 2K8 Quebec (CA); Forsgren, Daniel, 42340 Torslanda (SE)
(74) Representative: Valea AB

(56) References cited:
- DE-A1-102004 002 049
- DE-A1-102010 023 528
- US-A1- 2012 291 893

## Description

### Technical field

The present invention relates generally to the distribution of air within the interior of a vehicle.

### Background art

Vehicles, such as automotive vehicles, typically include a system for air distribution within the interior of the vehicle. Such system provides means for both adapting the climate in the passenger compartment as well as providing safety functionality such as defrosting or demisting of the windscreen. The air vents can be arranged to blow air in a fixed direction or be adjustable by the operator depending on their purpose and location on the dashboard.

In prior art it is well known that the shape and form of an air vent have a relation to its functionality. For example, the conventional air vent is designed to allow the largest volume of air possible to pass through the air vent without generating any substantial noise from the surrounding perimeter. It is thereby well known in the art that the cylindrical shape is the optimal form allowing the maximum amount of air to flow in relation to the least amount of surface area in the surrounding perimeter. The cylindrical shape is not always preferable from a design perspective why different forms and shapes are common within the field. The air flow together with the temperature of the air has direct correlations to the efficiency of the air distribution system. In the conventional vehicle air distribution system it is thereby the objective of the heater blower unit (also known as H-VAC) to produce a wide flow of climate controlled air that by the operator can be directed towards different parts of the interior of a vehicle. Due to the high demands on air flow the heater blower unit (H-VAC) is one of the most energy consuming units in many vehicles and it is also a unit of significant size.

The conventional design comprises air ducts connected to air vents in the dashboard, wherein the air vents distribute air through horizontal and vertical slats arranged in a grid. For the vents directed towards the driver and passengers of the vehicle the horizontal and vertical slats are arranged to be adjustable in order to direct the airstream of hot or cold air. Vents directed towards the windscreen are typically fixed to a predetermined position and thereby arranged to defrost and demist the windscreen.

One problem with the conventional air distribution system is that its conventional air vents comprise many mechanical parts and require significant space. It would be desirable to enhance the performance of a vehicle air distribution system while maintaining or decreasing the size of the heater blower unit (H-VAC) in order to faster defrost and/or demist the windscreen as well as generating better comfort and well being within the passenger compartment.

Attempts to enhance the performance of vehicle air distribution systems have previously been made. For example document JP3910283 B2 discloses an air duct comprising a duct in which a smaller diameter throat is arranged. When the air flows through the smaller diameter duct, an under pressure is created in the gap between the duct and the throat, thus air is sucked through the gap and the total flow rate of the air through the duct is increased. While this solution partially solves the problem of increasing the air flow within the ducts it suffers from all the drawbacks related to the original air vent. Those are for example air pockets created in the corners of the air vent which limit the flow of air in to the passenger compartment. Although said improvements increase the flow of air the aero dynamic resistance in the corners still exists limiting the overall effect. Furthermore, significant mechanical features are required in order to direct the air in the direction desired by the operator and thereby slats have to be included in the total design. Those slats have to be both thin and strong why they conventionally are made by thin, durable, and normally expensive materials such as magnesium. The arrangement of slats requires the adjusting means to be complex and include a significant amount of mechanical and moving parts.

Another solution is presented in FR2859152 which solves some of the above mentioned problems. Here an air diffusion nozzle for use as a windshield demister comprises two lateral passages surrounding an elongated gap in an air tube. The lateral passage provides two slow air flows adjacent to a rapid air flow flowing through the air tube. This solution, similar to the one described before, solves the problem of accelerating air. However, it does not solve the issues of dragging larger amount of air out of non-circular air vents nor does it remove the need for the significant amount of mechanical features required in order to direct the air in the direction desired by the operator.

Patent documents DE102010 023528A1 and US2012/0291893A1 disclose air distribution devices for a vehicle. Each device has an air flowing channel designed in a housing body, where the air flowing channel is discharged into an outlet opening. Air guiding lamellas, i.e. double lamellas, are movably arranged in the channel. A discharge direction of air escaping from the outlet opening is changed by the air guiding lamellas. The air guiding lamellas include lamella bars, which extend relative to each other in a parallel manner. The lamella bars are designed for integrally forming the air guiding lamellas with each other.

With the above solutions in mind it would be advantageous to provide an air distribution system that increased the air speed, is capable of allowing more air out from the air vent through aero dynamical features, decreases the noise level of the flowing air, and provided means to decrease the amount of mechanical moving parts required in order to direct the air flow.

### Summary of invention

An object of the present invention is to provide an air distribution system that increases the air speed through air vents while dragging more air out from said vents by decreasing the aero dynamic pockets in the corners. Another object of the present invention is to decrease the noise made from high air flow rates within an air vent and provide means to decrease the amount of mechanical moving parts required in order to direct the air flow. It is beneficial to increase the air flow in order to rapidly adjust the climate of a vehicle passenger compartment. Furthermore, it is preferable for the passenger environment to decrease the noise level created from the climate control and air vents within the passenger compartment.

These objects are achieved by the air distribution system and method as set forth in the appended claims.

Thus, the invention relates to an air distribution system for the interior of a vehicle comprising an air vent, wherein at least one air blade is arranged substantially within the air vent and that said air vent comprises an air duct adapted to allow air distribution through an elongated gap arranged in the air blade.

The air distribution system for the interior of a vehicle may comprise adjustment means allowing for adjustment of said at least one air blade between at least two states. Said at least two states are for example different directions which the air could be distributed towards and/or states of air flow where the air flow could be adjusted from a state where the air vent is substantially closed towards a state where the air vent is fully open allowing the maximum air capacity to flow through it. It is understood that this could be done either by central adjust means controlling all air vents of the air distribution system, individually at each air vent, or a combination thereof. The direction of the outlet air can in one further embodiment be directed towards any direction by the operation of the adjustment means.

Adjusting the direction of the air flow allows for independent direction of the air flow from each air vent which provides the operator with the possibility to change the air flow within the passenger compartment. This allows for adaption towards individual comfort preferences.

According to the invention, the air distribution system also comprises spaces on the sides of the air blade that are adapted to allow air to flow at a normal pressure while the air within the elongated gap flows at a higher pressure.

The normal pressure air outside of the air blade allows for the full volume to be distributed throughout the passenger compartment.

According to the invention, the at least one air blade of the air distribution system comprises a nozzle at one end and the nozzle comprises an extending portion arranged to break the air stream, preferably to create turbulent air. Turbulent air allows for disturbance of the air and creates opportunities to form the air vent in such ways that more air can be dragged out of the air vent without generating air pockets.

In another embodiment the extending portion is substantially perpendicular to the extension direction of the air blade and arranged at one end of the air blade.

The nozzle is in one embodiment arranged at the end of the air blade that is closest to the outlet of the air vent, the nozzle is adapted to break the air stream and create turbulence in the outlet air. The turbulence helps dragging air along from every part of the air vent and decreases the formation of air pockets. This creates diffusion of the air in contrary to the laminar flow that is commonly used within the field. Diffusion of the air allows for comfort within the passenger compartment because the less direct air stream decreases the feeling of sitting in a draft.

It is further understood that the nozzle could be placed at any location favorable within the air vent or air duct.

The shape of the air blade could in one embodiment be adapted to create turbulence diffusing the outlet air in order to faster defrost and/or demist the windscreen or generating better comfort and well being within the passenger compartment.

In another embodiment the shape of the air blade could be adapted to focus the air into a single stream in order to faster defrost and/or demist for example a windscreen.

For rapid cooling or heating, preferably in areas where the air stream is not directed towards the operators, a focused air stream is preferred. Such air stream can for example demist or defrost a windscreen much quicker than the conventional method with a linear air flow from the entire air vent spreading out across for example the windscreen.

The air distribution system can comprise additional features in order to enhance the operator experience by improving the performance. In one embodiment, located around the edge of the air vent, the air distribution system also comprises a frame leaving a gap between the frame and the edge of the air vent to allow constant leakage of air. Said frame is deployed around the edge of the air vent in order to create a constantly open section of the air vent allowing air to flow independently of the state of the previously described adjustment means. Such constant flow is commonly, and hereinafter, referred to as air leakage. Constant air leakage is normally preferable in the passenger compartment of vehicles in order to allow limited circulation even if all air vents are adjusted to a closed state.

In one further embodiment the air blade of said air distribution system is arranged pivotally and directed towards the windscreen, preferably to allow said at least one air blade to direct air towards different sections of the windscreen.

In yet another embodiment of the air distribution system for the interior of a vehicle the air blade comprises means for automatic movement along the pivot axis.

A pivotally arranged air distribution system directed towards the for example the windscreen allows for the air to be focused to defrost or demist a single section of the windscreen before moving on to the next one. By means of a sweeping motion the entire windscreen can thereby be cleared and due to the increased air flow the system can perform the demisting or defrosting operation in a significantly shorter time than the traditional systems.

In one embodiment said vehicle is a motor vehicle, preferably a car, truck, bus or any other vehicle suitable for human transportation.

In another embodiment the vehicle comprises a dashboard and a centre console wherein the at least one air vent is arranged in a substantially vertical direction in said centre console and that said at least one air vent is extending downwards from the dashboard.

By mounting the center air vents vertically is it possible to free a significant amount of space on the dashboard that can be used for other purposes, such as a display or radio unit.

In another embodiment said air vent is mounted at any of the following different locations in the passenger compartment of a vehicle; the dashboard, A-, B-, or C-pillar, at the floor, in the roof, or at any other suitable location for an air vent.

Another aspect of the invention is a method for distributing air in a vehicle comprising an air vent wherein air is directed through an elongated gap of an adjustable air blade located substantially within the air vent.

Another aspect of the invention relates to the method for distributing air in a vehicle and further comprises that air passes through a frame around the edge of the air vent independent of adjustment settings of the air blade.

Another aspect of the invention that relates to the method for distributing air in a vehicle comprises the steps:
- directing air through the air blade towards a windscreen;
- automatically pivoting the air blade along the vertical or horizontal axis of the windscreen creating a sweeping motion across the windscreen;

This operation improves the performance of removing ice or demist with an air flow during a sweeping motion.

Yet another aspect of the invention that relates to the method for distributing air in a vehicle is that the method further comprises the steps of:
- collecting information from sensors, preferably temperature and windscreen demist or ice information;
- execution of a pre-programmed sequence determining at least the pace of the sweeping motion or air temperature of the blowing air based on the collected sensor information.

The air blade can in one embodiment be pivotally attached to allow the air blade to direct air towards different areas of the windscreen or passenger compartment. The pivot arrangement allows for the air blade to sweep the windshield in a continuous motion in order to defrost or demist the windshield. It is understood that this movement can be manual or automatic, at a constant or irregular speed, and with one or multiple air blades. In one embodiment the air blade motion is controlled by a computer that either operates from fixed variables or operates from values provided by external sensors, such as temperature, precipitation, and any other sensor or sensors suitable for use in a vehicle comprising relevant information.

The air blade design allows for the air vent to be narrow in its shape, in relation to the previous known art, which provides new possibilities. For example, the air vent can in one beneficial embodiment be arranged vertical in the center console of a passenger car, truck, or bus. Such arrangement saves space and allows for an even distribution of air throughout the vertical space within the passenger compartment. The narrow design of the entire air vent also makes it suitable for arrangement in other narrow parts of a vehicle, such as the A-, B-, or, C-pillars.

### Brief description of drawings

The invention is now described, by way of example, with reference to the accompanying drawings, in which:
Fig. 1 discloses a first embodiment of the invention from a front view visible from the passenger compartment of a vehicle.
Fig. 2 discloses a slightly tilted view of Fig. 1 illustrating a second embodiment including the front nozzle.
Fig. 3 discloses a front view of a third embodiment that comprises a frame located around the edge of the air vent leaving a gap between the frame and the edge of the air vent.
Fig. 4 discloses a fourth embodiment showing an air distribution system adapted to demist and/or defrost a windscreen.
Fig. 5 is a detailed view of the front nozzle.

### Description of embodiments

In the following, a detailed description of the different embodiments of the invention is disclosed under reference to the accompanying drawings. All examples herein should be seen as part of the general description and are therefore possible to combine in any way in general terms. Individual features of the various embodiments and methods may be combined or exchanged unless such combination or exchange is clearly contradictory to the overall function of the air distribution system.

Briefly described, the invention relates to an air distribution system for the passenger compartment of a vehicle. The system comprises at least one air blade located substantially in the center of an air vent. The air blade has a shape that allows for air to pass through the center of the air blade and for air to pass through on the outside of said air blade at a lower pressure. The air blade further comprises different embodiments of the invention described below.

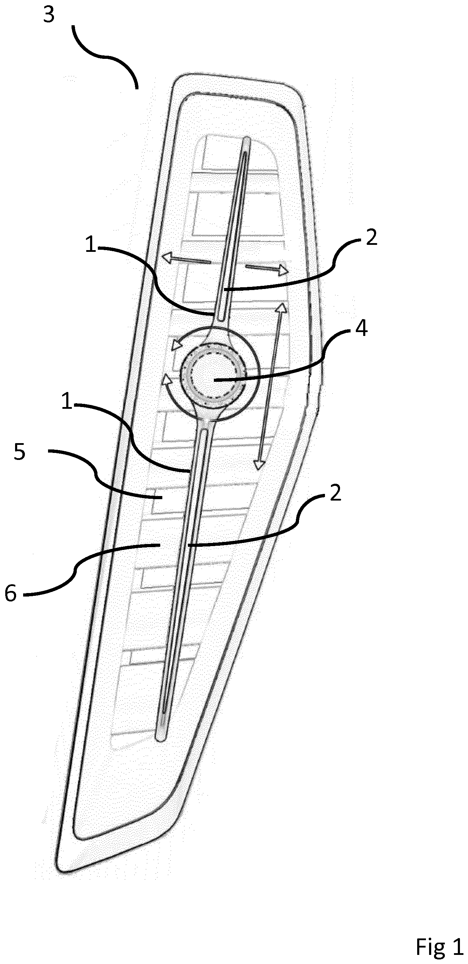

In figure 1 a first embodiment of the invention is shown from a front view showing the part of the air distribution system as normally visible from the passenger compartment. The air distribution system comprises an air blade 1 located substantially inside an air vent 3 and with at least one gap 2 arranged in the center of the air blade 1, adapted to allow air to flow through the air blade 1 and out on the other side. The gap 2 arranged in the center of the air blade 1 is adapted as an air blade air outlet 2 allowing air to flow through the interior of the air blade 1. The area inside the air vent 3 that is located around the air blade 1 constitutes the main air flow outlet 6 which is substantially larger than the air blade air outlet 2.

The air blade 1 is a thin structure that comprises at least one gap 2 within its body allowing for air to pass both around and through the air blade 1. The thin structure constituting the air blade 1 is arranged within an air vent 3 and may have many different shapes and forms as described throughout this disclosure and the appended claims.

The air blade 1 is pivotally arranged within the air vent allowing it to be adjusted in order to direct air towards different sections of the passenger compartment area. In order to do this the air blade 1 or air vent 3 can further comprise at least one adjustment means 4 adapted to adjust the position of the air blade and/or the amount of air flowing through the air vent 3. The adjustment means 4 can be a leaver, knob, electronic button, touch-screen or any other means to adjust the direction of the outlet air. It is further understood that the air vent 3 or air blade 1 can be adjusted manually through mechanical means or automatically through means for automatic movement, such as a motor or servo. The direction of the outlet air can be directed towards any direction with the help of the adjustment means 4. The adjustment means 4 can in one example embodiment of the first embodiment have the following functionality by moving said adjustment means 4: up/down rotates the rear air slats 5 to direct air up or down, side to side moves the air blade 1 from side to side directing air towards right or left, rotation adjust the amount of air or turns it off completely. Adjustment of the amount of air, or turning it off completely, is commonly done with a so called butterfly valve (not shown) located behind the air vent 3. Behind the air blade 1 are horizontal rear air slats 5 arranged which are adapted to direct an air stream heading towards the passenger compartment up or down. The horizontal rear air slats 5 are adjustable by means of the adjustment means 4. The adjustment means 4 or adjustment means 4 can be arranged both within and/or outside the air vent. Illustrated in figure 1, 2, and 3 are the preferred embodiment of the present invention where the adjustment means 4 is arranged in an integrated fashion with the air blade 1. Depending on the location of the adjustment means 4 the shape and form of the air blade 1, air vent 3, and the gap 2 all those features can be altered in shape and form to achieve the desired air flow.

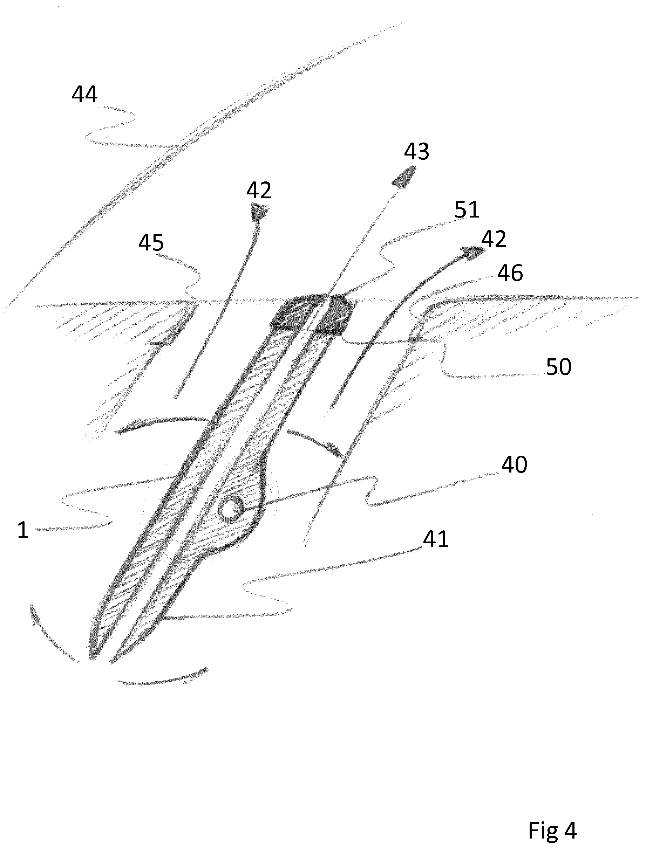

The air blade is in one embodiment formed with nozzles 41 at the rear end of the air blade 1. Such nozzles 41 could for example be narrowing parts at both sides of the air blade 1 as illustrated in figure 4. It is further understood that such nozzles 41 are applicable to any embodiment of the present invention.

Adjacent to the air blade 1 is the main flow outlet area allowing for normal pressure air 42 to flow out of the air vent. The air blade 1 further comprises the at least one gap as previously described allowing for high pressure air 43 to flow out of the air vent together with the normal pressure air 42. The normal pressure air 42 passes through in the close vicinity of the nozzle 20 and partially hits the extending portion 50 of said nozzle 20. The normal pressure air 42 hitting the extending portion 50 generates turbulence that helps drag air out of the areas around the air blade 1 and the edges or perimeter 32 of the air vent 3. The high pressure air 43 further increases this effect by creating an under pressure that drags the normal pressure air 42 out of the air vent 3.

The air blade 1 can have different sizes and forms and it is understood by the person skilled in the art that the air blade 1 can be adapted to fit the shape of any air vent 3. For example, in one embodiment (not shown) the air blade could be arranged in a substantially circular air vent. Such air blade could for example be formed as a straight wing, a curve or as a circular air blade within the air vent. Such arrangement could naturally be arranged in an air vent 3 of any form.

It is also understood that the air vent 3 can be mounted at different locations in the passenger compartment of a vehicle, for example in the dashboard, A-, B-, or C-pillar, at the floor, in the roof, or at any other location suitable for an air vent 3. Furthermore, the air vent 3 comprising an air blade 1 could be mounted in a convertible vehicle and be arranged to decrease the influence of the air flowing over the vehicle. Such an arrangement of the air vent 3 could for example be in the top part of the front windscreen frame.

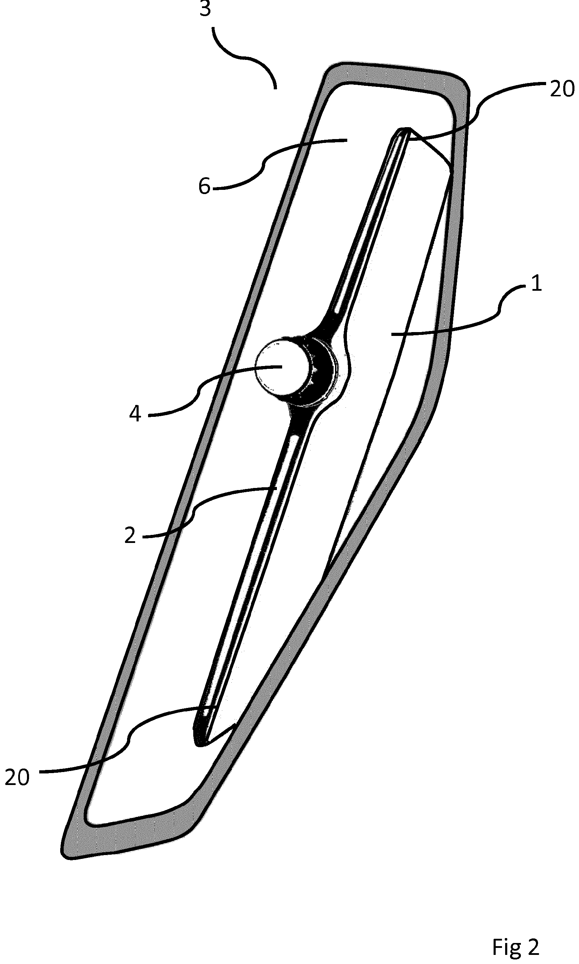

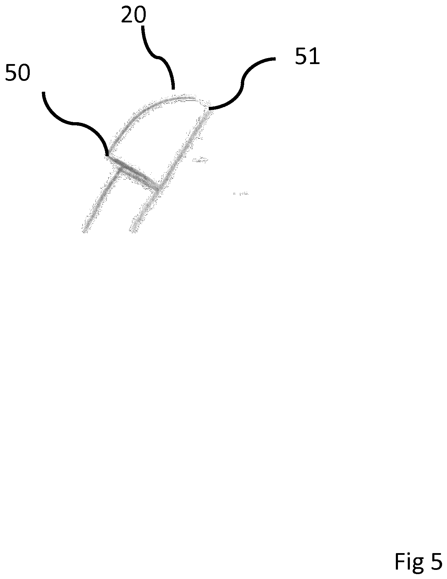

A second embodiment is shown in figure 2 which is substantially similar to the first embodiment. However, the embodiment illustrated in figure 2 comprises a nozzle 20 extending along the air blade 1 which is arranged at the end of the air blade which is closest to the outlet of the air vent. The nozzle 20 is shown in a detailed view in figure 5 and is illustrated in different embodiments in figure 2 and figure 4. The nozzle is adapted to break the air stream and create turbulence in the outlet air in order to help drag air along from every part of the air vent and decreases the formations of air pockets. The nozzle 20 comprises an extending portion 50 extending outwards in to the area of air traveling at a slower pace. Said extending portion 50 is substantially perpendicular to the extension direction of the air blade 1 and arranged at one end of the air blade 1. Said nozzle 20 further comprises a narrowing part extending from the extending portion 50 towards a tip 51 of the nozzle 20 which is adjacent to the outlet area of the air from the gap 2 of the air blade 1.

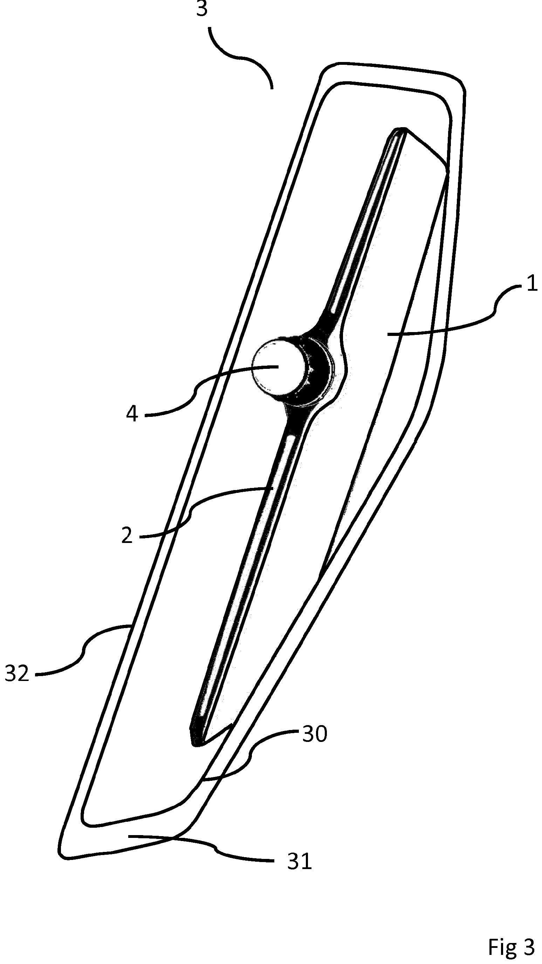

Figure 3 illustrates a third embodiment of the invention comprising a frame 30 arranged substantially at the edge of the air vent 3 allowing a gap 31 to be formed between said frame 30 and the edge 32 of the air vent 3. The frame 30 is preferably arranged at the front of the air vent 3 closest to the passenger compartment. Said gap 31 allows for air leakage in to the passenger compartment from the air vent 3 and the air ducts (not shown) behind the air vent 3.

The air blade 1 can further be arranged differently in different embodiments adapted to perform slightly different tasks. A fourth embodiment is illustrated in figure 4 showing the air blade arranged within an air vent directed towards, for example, a windscreen. The air blade is pivotally arranged with at least one pivot axis allowing the air blade 1 to change the direction of outlet air. Illustrated in figure 4 is a pivoted air blade 1 arranged to be rotatable about a pivot point or pivot axis 40 inside an air vent. The air blade 1 is further arranged to perform a manual or automatic sweep motion directing air towards different sections of the windscreen 44 by moving between at least two states between the first air vent wall 45 and the second air vent wall 46 generating a sweeping motion and continuously blowing air 42, 43 towards the windscreen 44. The sweeping motion can be a pre-programmed motion adapted to the design of the windscreen or a dynamic motion that adapts to external factors, such as temperature or demist level on the windscreen. A computer program could for example change the pace of the air blade motion, the temperature of the air 42, 43 and the number of repeated sweeping motions that are required in order to demist or defrost the windscreen 44. The operators could in one embodiment posses the possibility to over ride such a program and thereby force the motion to be continuous. It is understood that the high pressure air 43 can have different pressures in different embodiments depending on the purpose.

The air blade have a thin form that allows air to pass on both sides of the air blade as well as an elongated gap, hole, cavity, or hollowness in a substantial center of the air blade. Said elongated gap, hole, cavity, or hollowness allows air to pass through the internals of the air blade at a higher pressure than the air on the outer sides where the main air flow outlet is located.

It is understood that the air blade of said air distribution system can have different forms and shapes depending on factors such as local climate, location in the passenger compartment, form of the air vent, and features of the adjustment means. The form can differ both in profile and external form and it is one objective of the invention to provide a flexible solution that can be adapted to many different locations in the passenger compartment of a vehicle.

The profile of the air blade is in one embodiment substantially formed as the wing of an aero plane in order to improve the flow of air around its outer perimeters. Such form would be adapted to allow air to accelerate behind the wing creating turbulence and a diffused air flow in to the passenger compartment of the vehicle. It is one aspect of the invention that, if arranged correctly, such arrangement would change the aerodynamic properties of an air vent and allow for more air to pass through the air vent by, for example, decreasing air pockets around the edges of the air vent.

In another embodiment the air blade have a profile where both outer sides have a substantially equal form if mirrored around a central axis.

The air is in one embodiment directed only by means of the air blade.

The air is in one embodiment directed by means of the air blade and rear air slats.

It should be noted that in the detailed description above any embodiment or feature of an embodiment are only examples and could be combined in any way within the scope of the appended claims.

## Claims

1. An air distribution system for the interior of a vehicle comprising an air vent (3) wherein at least one air blade (1) is arranged substantially within the air vent (3) and that said air vent (3) comprises an air duct adapted to allow air distribution through an elongated gap (2) arranged in the air blade (1), wherein the gap (2) is arranged substantially in the center of the air blade (1) and is adapted as an air blade air outlet (2) allowing air to flow through the interior of the air blade (1), wherein the area inside the air vent (3) that is located around the air blade (1) constitutes the main airflow outlet (6) which is substantially larger than the air blade air outlet (2), wherein spaces on the sides of the air blade (1) are adapted to allow air (42) to flow at a normal pressure while the air (43) within the elongated gap (2) flows at a higher pressure, **characterized in that** said at least one air blade (1) comprises a nozzle (20, 41) at one end, the nozzle (20) comprises an extending portion (50) arranged to break the stream of air (42), preferably to create turbulent air.

2. The air distribution system for the interior of a vehicle according to claim 1, **characterized in that** said air distribution system comprises adjustment means (4) allowing for adjustment of said at least one air blade (1) between at least two states.

3. The air distribution system for the interior of a vehicle according to claim 1 or 2, **characterized in that** said extending portion (50) is substantially perpendicular to the extension direction of the air blade (1) and arranged at one end of said air blade (1).

4. The air distribution system for the interior of a vehicle according to any one of the preceding claims 1-3, **characterized in that** located around an edge (32) of the air vent (3) is a frame (30) leaving a gap (31) between the frame (30) and the edge (32) of the air vent (3) to allow constant leakage of air.

5. The air distribution system for the interior of a vehicle according to any one of the preceding claims 1-4, wherein said air distribution system is suitable to be directed towards a windscreen (44) of said vehicle, **characterized in that** the air blade (1) is arranged pivotally, preferably to allow said at least one air blade (1) to direct air towards different sections of the windscreen (44).

6. The air distribution system for the interior of a vehicle according to claim 5, **characterized in that** the air blade (1) comprises means for automatic movement about a pivot axis (40).

7. A vehicle, preferably a car, **characterized by** an air distribution system for the interior of a vehicle according to any one of the preceding claims 1-6.

8. The vehicle according to claim 7, **characterized in that** said vehicle comprises a dashboard and a centre console and that at least one air vent (3) is arranged in a substantially vertical direction in said centre console and that said at least one air vent (3) is extending downwards from the dashboard.

9. The vehicle according to claim 7 or 8, **characterized in that** said air vent (3) is mounted at any of the following different locations in the passenger compartment of a vehicle; the dashboard, A-, B-, or C-pillar, at the floor, in the roof, or at any other suitable location for an air vent (3).

10. A method for distributing air in a vehicle comprising an air vent (3) wherein air is directed through an elongated gap (2) of an adjustable air blade (1) located substantially within the air vent (3), wherein the gap (2) is arranged substantially in the center of the air blade (1) and is adapted as an air blade air outlet (2) allowing air to flow through the interior of the air blade (1), wherein the area inside the air vent (3) that is located around the air blade (1) constitutes the main air flow outlet (6) which is substantially larger than the air blade air outlet (2), wherein spaces on the sides of the air blade (1) are adapted to allow air (42) to flow at a normal pressure while the air (43) within the elongated gap (2) flows at a higher pressure and **characterized in that** said at least one air blade (1) comprises a nozzle (20) at one end, said nozzle (20) comprises an extending portion (50), which breaks the stream of air (42), preferably to create turbulent air.

11. The method for distributing air in a vehicle according to claim 10 **characterized in that** air passes through a gap (31) between a frame (30) around the edge (32) of the air vent (3) and the edge (32) of said air vent (3) independently of the adjustment settings of the air distribution system.

12. The method for distributing air in a vehicle according to claim 10 or 11, **characterized in that** the method comprises the steps:
- directing air through an air blade (1) towards a windscreen (44);
- automatically pivoting the air blade (1) along the vertical or horizontal axis of the windscreen creating a sweeping motion across the windscreen (44);

13. The method for distributing air in a vehicle according to claim 12, **characterized in that** the method further comprises the steps of:
- collecting information from sensors, preferably temperature and windscreen demist or ice information;
- executing a pre-programmed sequence determining at least the pace of the sweeping motion or air temperature of the blowing air (42, 43) based on the collected sensor information.

## Patentansprüche

1. Luftverdichtungssystem für den Innenraum eines Fahrzeugs, umfassend eine Belüftungsvorrichtung (3), wobei wenigstens ein Luftleitblech (1) im Wesentlichen in der Belüftungsvorrichtung (3) angeordnet ist und die Belüftungsvorrichtung (3) einen Luftkanal umfasst, der dazu ausgelegt ist, eine Luftverteilung durch einen längserstreckten Spalt (2), der in dem Luftleitblech (1) angeordnet ist, zu ermöglichen, wobei der Spalt (2) im Wesentlichen in der Mitte des Luftleitblechs (1) angeordnet und als Luftleitblechluftauslass (2) ausgelegt ist, der ermöglicht, dass Luft durch den Innenraum des Luftleitblechs (1) strömt, wobei der Bereich in der Belüftungsvorrichtung (3), der sich um das Luftleitblech (1) herum befindet, den Hauptluftströmungsauslass (6) darstellt, der im Wesentlichen größer als der Luftleitblechluftauslass (2) ist, wobei Räume auf den Seiten des Luftleitblechs (1) dazu ausgelegt sind, zu ermöglichen, dass Luft (42) bei einem normalen Druck strömt, während die Luft (43) in dem längserstreckten Spalt (2) bei einem höheren Druck strömt,
**dadurch gekennzeichnet, dass**
das wenigstens eine Luftleitblech (1) an einem Ende eine Düse (20, 41) umfasst, wobei die Düse (20) einen Verlängerungsabschnitt (50) umfasst, der so angeordnet ist, dass er den Strom von Luft (42) unterbricht, vorzugsweise um Luftdurchwirbelung zu erzeugen.

2. Luftverteilungssystem für den Innenraum eines Fahrzeugs nach Anspruch 1, **dadurch gekennzeichnet, dass** das Luftverteilungssystem Einstellmittel (4) umfasst, die eine Einstellung des wenigstens einen Luftleitblechs (1) zwischen wenigstens zwei Zuständen ermöglichen.

3. Luftverteilungssystem für den Innenraum eines Fahrzeugs nach Anspruch 1 oder 2, **dadurch gekennzeichnet, dass** der Verlängerungsabschnitt (50) im Wesentlichen senkrecht auf der Erstreckungsrichtung des Luftleitblechs (1) steht und an einem Ende des Luftleitblechs (1) angeordnet ist.

4. Luftverteilungssystem für den Innenraum eines Fahrzeugs nach einem der vorhergehenden Ansprüche 1 bis 3, **dadurch gekennzeichnet, dass** sich um einen Rand (32) der Belüftungsvorrichtung (3) ein Rahmen (30) befindet, der einen Spalt (31) zwischen dem Rahmen (30) und dem Rand (32) der Belüftungsvorrichtung (3) lässt, um einen konstanten Luftaustritt zu ermöglichen.

5. Luftverteilungssystem für den Innenraum eines Fahrzeugs nach einem der vorhergehenden Ansprüche 1 bis 4, wobei das Luftverteilungssystem dazu ausgelegt ist, auf eine Windschutzscheibe (44) des Fahrzeugs gerichtet zu werden, **dadurch gekennzeichnet, dass** das Luftleitblech (1) auf drehbare Weise angeordnet ist, vorzugsweise um zu ermöglichen, dass das wenigstens ein Luftleitblech (1) Luft auf unterschiedliche Abschnitte der Windschutzscheibe (44) richtet.

6. Luftverteilungssystem für den Innenraum eines Fahrzeugs nach Anspruch 5, **dadurch gekennzeichnet, dass** das Luftleitblech (1) Mittel zur automatischen Bewegung um eine Drehachse (40) umfasst.

7. Fahrzeug, vorzugsweise ein Auto, **gekennzeichnet durch** ein Luftverteilungssystem für den Innenraum eines Fahrzeugs nach einem der vorhergehenden Ansprüche 1 bis 6.

8. Fahrzeug nach Anspruch 7, **dadurch gekennzeichnet, dass** das Fahrzeug ein Armaturenbrett und eine Mittelkonsole umfasst und dass wenigstens eine Belüftungsvorrichtung (3) in einer im Wesentlichen vertikalen Richtung in der Mittelkonsole angeordnet ist und dass sich die wenigstens eine Belüftungsvorrichtung (3) von dem Armaturenbrett nach unten erstreckt.

9. Fahrzeug nach Anspruch 7 oder 8, **dadurch gekennzeichnet, dass** die Belüftungsvorrichtung (3) an einer der folgenden unterschiedlichen Stellen in dem Fahrgastraum eines Fahrzeugs befestigt ist: dem Armaturenbrett, der A-, B- oder C-Säule, am Boden, im Dach oder an jeder beliebigen anderen für eine Belüftungsvorrichtung (3) geeigneten Stelle.

10. Verfahren zum Verteilen von Luft in einem Fahrzeug, das eine Belüftungsvorrichtung (3) umfasst, wobei Luft durch einen längserstreckten Spalt (2) eines einstellbaren Luftleitblechs (1) gerichtet wird, das sich im Wesentlichen in der Belüftungsvorrichtung (3) befindet, wobei der Spalt (2) im Wesentlichen in der Mitte des Luftleitblechs (1) angeordnet und als Luftleitblechluftauslass (2) ausgelegt ist, der ermöglicht, dass Luft durch den Innenraum des Luftleitblechs (1) strömt, wobei der Bereich in der Belüftungsvorrichtung (3), der sich um das Luftleitblech (1) herum befindet, den Hauptluftströmungsauslass (6) darstellt, der im Wesentlichen größer als der Luftleitblechluftauslass (2) ist, wobei Räume auf den Seiten des Luftleitblechs (1) dazu ausgelegt sind, zu ermöglichen, dass Luft (42) bei einem normalen Druck strömt, während die Luft (43) in dem längserstreckten Spalt (2) bei einem höheren Druck strömt, und
**dadurch gekennzeichnet, dass**
das wenigstens eine Luftleitblech (1) an einem Ende eine Düse (20) umfasst, wobei die Düse (20) einen Verlängerungsabschnitt (50) umfasst, der den Luftstrom (42) unterbricht, vorzugsweise um Luftdurchwirbelung zu erzeugen.

11. Verfahren zum Verteilen von Luft in einem Fahrzeug nach Anspruch 10, **dadurch gekennzeichnet, dass** Luft durch einen Spalt (31) zwischen einem Rahmen (30) um den Rand (32) der Belüftungsvorrichtung (3) und dem Rand (32) der Belüftungsvorrichtung (3) unabhängig von den Einstellungen des Luftverteilungssystems strömt.

12. Verfahren zum Verteilen von Luft in einem Fahrzeug nach Anspruch 10 oder 11, **dadurch gekennzeichnet, dass** das Verfahren die folgenden Schritte umfasst:
- Richten von Luft durch ein Luftleitblech (1) auf eine Windschutzscheibe (44),
- automatisches Drehen des Luftleitblechs (1) entlang der vertikalen oder horizontalen Achse der Windschutzscheibe, wodurch eine schweifende Bewegung über die Windschutzscheibe (44) erzeugt wird.

13. Verfahren zum Verteilen von Luft in einem Fahrzeug nach Anspruch 12, **dadurch gekennzeichnet, dass** das Verfahren ferner die folgenden Schritte umfasst:
- Erfassen von Informationen von Sensoren, vorzugsweise Informationen zu Temperatur sowie Entfeuchtung und Vereisung der Windschutzscheibe,
- Durchführen eines vorprogrammierten Ablaufs, der wenigstens die Geschwindigkeit der strömenden Bewegung oder die Lufttemperatur der Gebläseluft (42, 43) auf Grundlage der erfassten Sensorinformationen bestimmt .

## Revendications

1. Système de distribution d'air pour l'intérieur d'un véhicule comprenant un évent d'air (3) dans lequel au moins une lame d'air (1) est disposée sensiblement à l'intérieur de l'évent d'air (3) et ledit évent d'air (3) comprenant un conduit d'air adapté pour permettre une distribution d'air à travers un espace allongé (2) disposé dans la lame d'air (1), l'espace (2) étant disposé sensiblement au centre de la lame d'air (1) et étant adapté comme une sortie d'air de lame d'air (2) permettant à l'air de circuler dans l'intérieur de la lame d'air (1), la zone à l'intérieur de l'évent d'air (3) qui est située autour de la lame d'air (1) constituant la sortie d'écoulement d'air principale (6) qui est sensiblement plus grande que la sortie d'air de la lame d'air (2), les espaces sur les côtés de la lame d'air (1) étant adaptés pour permettre à l'air (42) de circuler à une pression normale tandis que l'air (43) dans l'espace allongé (2) circule à une pression supérieure,
**caractérisé en ce que** ladite au moins une lame d'air (1) comprend une buse (20, 41) à une extrémité, la buse (20) comprenant une partie d'extension (50) agencée pour interrompre le flux d'air (42), de préférence pour créer un air turbulent.

2. Système de distribution d'air pour l'intérieur d'un véhicule selon la revendication 1, **caractérisé en ce que** ledit système de distribution d'air comprend des moyens de réglage (4) permettant le réglage de ladite au moins une lame d'air (1) entre au moins deux états.

3. Système de distribution d'air pour l'intérieur d'un véhicule selon la revendication 1 ou 2, **caractérisé en ce que** ladite partie d'extension (50) est sensiblement perpendiculaire à la direction d'extension de la lame d'air (1) et disposée à une extrémité de ladite lame (1).

4. Système de distribution d'air pour l'intérieur d'un véhicule selon l'une quelconque des revendications précédentes 1 à 3, **caractérisé en ce qu'**autour d'un bord (32) de l'évent d'air (3) se trouve un cadre (30) laissant un espace (31) entre le cadre (30) et le bord (32) de l'évent d'air (3) pour permettre une évacuation constante d'air.

5. Système de distribution d'air pour l'intérieur d'un véhicule selon l'une quelconque des revendications précédentes 1 à 4, ledit système de distribution d'air étant apte à être dirigé vers un pare-brise (44) dudit véhicule, **caractérisé en ce que** la lame d'air (1) est disposée de manière pivotante, de préférence pour permettre à ladite au moins une lame d'air (1) de diriger l'air vers différentes sections du pare-brise (44) .

6. Système de distribution d'air pour l'intérieur d'un véhicule selon la revendication 5, **caractérisé en ce que** la lame d'air (1) comporte des moyens pour un mouvement automatique autour d'un axe de pivotement (40) .

7. Véhicule, de préférence une voiture, **caractérisé par** un système de distribution d'air pour l'intérieur d'un véhicule selon l'une quelconque des revendications précédentes 1 à 6.

8. Véhicule selon la revendication 7, ledit véhicule comprenant un tableau de bord et une console centrale et au moins un évent d'air (3) étant disposé dans une direction sensiblement verticale dans ladite console centrale et ledit au moins un évent d'air (3) étant dirigé vers le bas depuis le tableau de bord.

9. Véhicule selon la revendication 7 ou 8, **caractérisé en ce que** ledit évent d'air (3) est monté à l'un quelconque des emplacements différents suivants dans l'habitacle d'un véhicule : le tableau de bord, le montant avant, central ou arrière, au sol, dans le toit, ou à tout autre emplacement approprié pour un évent d'air (3).

10. Procédé de distribution d'air dans un véhicule comprenant un évent d'air (3) dans lequel l'air est dirigé à travers un espace allongé (2) d'une lame d'air réglable (1) située sensiblement dans l'évent d'air (3), l'espace (2) étant disposé sensiblement au centre de la lame d'air (1) et étant adapté comme une sortie d'air de lame d'air (2) permettant à l'air de circuler dans l'intérieur de la lame d'air (1), la zone à l'intérieur de l'évent d'air (3) qui est située autour de la lame d'air (1) constituant la sortie d'écoulement d'air principale (6) qui est sensiblement plus grande que la sortie d'air de la lame d'air (2), les espaces sur les côtés de la lame d'air (1) étant adaptés pour permettre à l'air (42) de circuler à une pression normale tandis que l'air (43) dans l'espace allongé (2) circule à une pression supérieure et
**caractérisé en ce que** ladite au moins une lame d'air (1) comprend une buse (20) à une extrémité, ladite buse (20) comprenant une partie d'extension (50) qui interrompt le flux d'air (42), de préférence pour créer un air turbulent.

11. Procédé de distribution d'air dans un véhicule selon la revendication 10, **caractérisé en ce que** l'air passe à travers un espace (31) entre un cadre (30) autour du bord (32) de l'évent d'air (3) et le bord (32) dudit évent d'air (3) indépendamment des paramètres de réglage du système de distribution d'air.

12. Procédé de distribution d'air dans un véhicule selon la revendication 10 ou 11, **caractérisé en ce que** le procédé comprend les étapes consistant à :
- diriger l'air à travers une lame d'air (1) vers un pare-brise (44) ;
- faire pivoter automatiquement la lame d'air (1) le long de l'axe vertical ou horizontal du pare-brise en créant un mouvement de balayage à travers le pare-brise (44).

13. Procédé de distribution d'air dans un véhicule selon la revendication 12, **caractérisé en ce que** le procédé comprend en outre les étapes consistant à :
- collecter des informations à partir de capteurs, de préférence la température et le désembuage du pare-brise ou des informations sur la glace ;
- exécuter une séquence préprogrammée déterminant au moins le rythme du mouvement de balayage ou la température d'air de l'air de soufflage (42, 43) sur la base des informations collectées par le capteur.
